# EUROPÄISCHE PATENTSCHRIFT

(11) **EP 2 505 528 B1**
(45) Veröffentlichungstag und Bekanntmachung des Hinweises auf die Patenterteilung: **10.06.2015**
(21) Anmeldenummer: 12001352.9
(22) Anmeldetag: 29.02.2012
(51) Int. Cl.: B65G 47/31, B65G 43/10

(54) **Verfahren zum Übergeben von Artikeln in einem Transportsystem**
Method for transferring items in a transport system
Procédé de transfert d'articles dans un système de transport

(30) Priorität: 01.04.2011 DE 102011015766
(43) Veröffentlichungstag der Anmeldung: 03.10.2012
(73) Patentinhaber: MULTIVAC Sepp Haggenmüller GmbH & Co KG, 87787 Wolfertschwenden (DE)
(72) Erfinder: Buchberger, Peter, 87448 Waltenhofen (DE); Buchenberg, Wolfgang, 87466 Oy-Mittelberg (DE); Gross, Wolfgang, 87779 Trunkelsberg (DE)
(74) Vertreter: Grünecker Patent- und Rechtsanwälte PartG mbB

(56) Entgegenhaltungen:
- EP-A1- 0 816 273
- US-A1- 2009 114 508
- US-B1- 6 763 931

## Beschreibung

Die vorliegende Erfindung bezieht sich auf ein Verfahren zum Übergeben eines Artikels in einem Transportsystem gemäß dem Oberbegriff des Anspruchs 1.

Aus der Praxis sind solche Verfahren und Transportsysteme bekannt, beispielsweise im Zusammenspiel mit Verpackungsmaschinen bzw. Verpackungsanlagen. Bei solchen Transportsystemen gibt es häufig die Anforderung, Artikel (im Fall von Verpackungsmaschinen beispielsweise Verpackungen) von einer unregelmäßigen Anordnung auf einem ersten Transportmittel in eine regelmäßige, äquidistante Anordnung auf einem zweiten Transportmittel zu überführen. Ebenso kann die Anforderung auftreten, Artikel von einer regelmäßigen Anordnung mit einem ersten gegenseitigen Abstand auf dem ersten Transportmittel in eine regelmäßige Anordnung mit einem zweiten, anderen gegenseitigen Abstand auf dem zweiten Transportmittel zu überführen. Auf diese Weise können die Artikel auf dem zweiten Transportmittel mit einem vorgegebenen Abstand voneinander gruppiert, angeordnet und weitertransportiert werden.

EP 0 816 273 A1 offenbart beispielsweise ein Verfahren und eine Vorrichtung zum Fördern von Blattstapeln und Erzeugen von konstanten Abständen zwischen den Blattstapeln. US 6,763,931 B1 zeigt ein Transportsystem mit zwei Transportbändern, um mit geringen Beschleunigungen zwei benachbarte Produkte auf einen vorgegebenen Abstand zu bringen. US 2009/0114508 A1 offenbart mehrere in Reihe angeordnete Transportbänder, um unregelmäßig beabstandete Produkte am Ende auf ein Mitnehmertransportband einzutakten.

Wichtig ist es dabei in vielen Fällen, dass während der Übergabe eines Artikels vom ersten auf das zweite Transportmittel keine Relativbewegung zwischen den beiden Transportmitteln auftritt, d.h. dass sich die beiden Transportmittel während einer sogenannten "Synchronphase" mit derselben Geschwindigkeit bewegen. Andernfalls könnte es zu unkontrollierbarem Schlupf oder einem Verkanten der Artikel kommen, die ein äquidistantes Gruppieren unmöglich machen würden. Außerdem könnte es zu einer abrupten Beschleunigung oder einem abrupten Abbremsen beim Übergang vom einen auf das andere Transportmittel kommen. Dies könnte beispielsweise bei flüssigen Produkten in transportierten Verpackungen zu einem Überschwappen und damit zu einer Verunreinigung des Transportsystems führen.

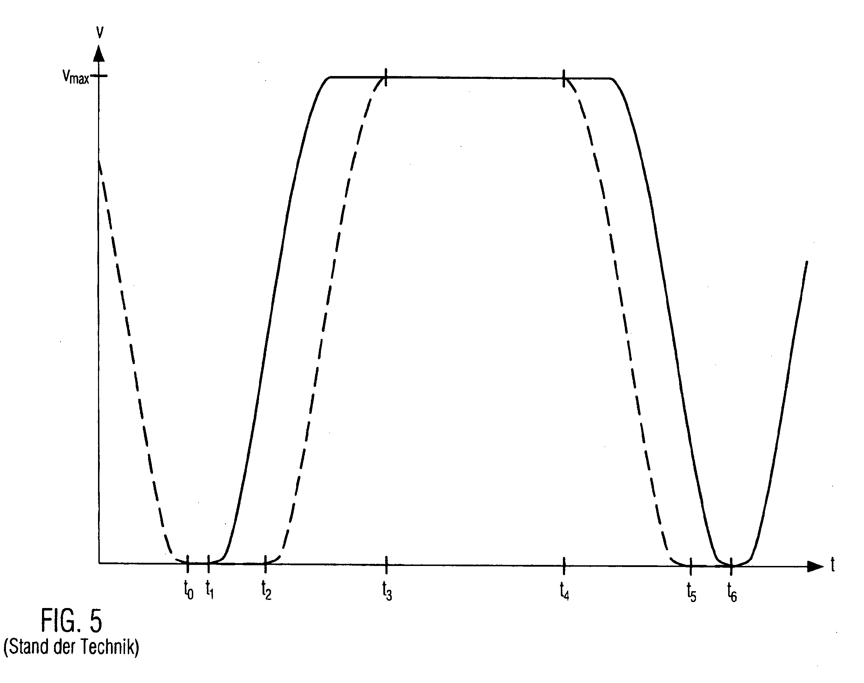

Figur 5 zeigt beispielhaft den Verlauf der Geschwindigkeitsprofile eines ersten und eines zweiten Transportmittels in einem herkömmlichen Transportsystem. Dabei werden die transportierten Artikel von einem ersten Transportmittel auf ein zweites Transportmittel übergeben. Das Geschwindigkeitsprofil des ersten Transportmittels ist in durchgezogener Linie dargestellt, dass Geschwindigkeitsprofil des zweiten Transportmittels mit einer gestrichelten Linie. Die Geschwindigkeitsprofile der beiden Transportmittel wiederholen sich periodisch. Eine Periode bzw. ein Arbeitstakt beginnt mit einer Ruhephase, in der beide Transportmittel still stehen. Zum Zeitpunkt t1 setzt sich das erste Transportmittel, das bis zum Beginn einer Synchronphase einen weiteren Weg zurückzulegen hat als das zweite Transportmittel, beschleunigt in Bewegung. Diese Beschleunigung erfolgt bis zu einer Maximalgeschwindigkeit vₘₐₓ. Zu einem späteren Zeitpunkt t2 setzt sich auch das zweite Transportmittel in Bewegung. Genau zu dem Zeitpunkt, zu dem das zweite Transportmittel die Maximalgeschwindigkeit vₘₐₓ erreicht, d.h. zum Zeitpunkt t3, beginnt die Synchronphase, in der sich beide Transportmittel mit einer konstanten und gemeinsamen Geschwindigkeit vₘₐₓ bewegen. Die Synchronphase ist zeitlich so gelegt, dass während der Synchronphase die Artikel (beispielsweise Verpackungen) vom ersten Transportmittel auf das zweite Transportmittel übergeben werden.

Zum Zeitpunkt t4 endet die Synchronphase. Zunächst wird nur das zweite Transportmittel abgebremst, da das erste Transportmittel noch einen weiteren Weg zurückzulegen hat und daher zunächst seine Geschwindigkeit vₘₐₓ beibehält. Erst nach einer gewissen Zeitspanne wird auch das erste Transportmittel abgebremst. Zum Zeitpunkt t5 kommt das zweite Transportmittel zur Ruhe, zu einem späterem Zeitpunkt t6 auch das erste Transportmittel. Damit entspricht der Zeitpunkt t6 funktional dem Zeitpunkt t0, d.h. beim Zeitpunkt t6 beginnt ein neuer Takt bzw. Zyklus.

Die in Figur 5 gezeigten Geschwindigkeitsprofile werden durch die von den beiden Transportmitteln vorgegebenen Randbedingungen bestimmt. Beispielsweise darf eine bestimmte Maximalgeschwindigkeit durch die beiden Transportmittel nicht überschritten werden, da die Transportmittel üblicherweise nur bis zu einer bestimmten Maximalgeschwindigkeit ausgelegt sind oder die Artikel nur mit einer bestimmten Maximalgeschwindigkeit transportiert werden dürfen. Wenn es sich bei dem Artikel beispielsweise um Salat in einer Verpackung handelt, könnte der Salat bei einer zu hohen Geschwindigkeit über den Packungsrand geweht werden. Außerdem darf eine bestimmte Beschleunigung oder Verzögerung nicht überschritten werden, da sonst das Transportmittel, sein Antrieb oder der vom Transportmittel beförderte Artikel zu stark belastet werden oder die für den Transport benötigte Reibung zwischen dem Transportmittel und dem Artikel zu klein wird oder ein flüssiger Inhalt des Artikels überschwappen könnte. Darüber hinaus müssen die beiden Transportmittel bestimmte Wege zurücklegen, um die Artikel zu bestimmten Zeitpunkten übergeben zu können, und um sie auf dem zweiten Transportmittel in vorgegebenen Abständen gruppieren zu können. Der zurückzulegende Weg ergibt sich bei den Geschwindigkeits-Zeit-Diagramm gemäß Figur 5 als Integral unter dem jeweiligen Geschwindigkeitsprofil.

In der sogenannten "Beschleunigungsphase" zwischen den Zeitpunkten t1 und t3, d.h. vom Beginn der Beschleunigung des ersten Transportmittels bis zum Beginn der Synchronphase, ist das Integral unter dem Geschwindigkeitsprofil des ersten Transportmittels und damit der von diesem ersten Transportmittel zurückgelegte Weg größer als das Integral unter dem Geschwindigkeitsprofil des zweiten Transportmittels. Die Maximalbeschleunigung der beiden Transportmittel bestimmt, wie steil die Kurve des Geschwindigkeitsprofils maximal ansteigen kann. Ausgehend von dem jeweils zurückzulegenden Weg und von dem gewünschten Zeitpunkt t3 des Beginns der Synchronphase ergibt sich damit der Startpunkt t1 und t2 der Beschleunigung des jeweiligen Transportmittels. Die gleichen Überlegungen gelten analog auch für die Bremsphase zwischen den Zeitpunkten t4 und t6. Auch hier muss das erste Transportmittel im dargestellten Beispiel einen größeren Weg zurücklegen als das zweite Transportmittel. Entsprechend größer muss das Integral unter dem Geschwindigkeitsprofil des ersten Transportmittels sein. Dies wird erreicht, indem das erste Transportmittel nach dem Ende der Synchronphase im Zeitpunkt t4 noch länger seine Maximalgeschwindigkeit vₘₐₓ beibehält als das zweite Transportmittel.

Aufgabe der vorliegenden Erfindung ist es, eine Möglichkeit zur Verfügung zu stellen, den Prozess der Übergabe eines Artikels von einem ersten Transportmittel auf ein zweites Transportmittel im Hinblick auf möglichst kurze Übergabezeiten zu optimieren, während gleichzeitig nachteilige Einflüsse wie extreme Beschleunigungen auf den Artikel vermieden werden sollen, wobei der Übergabeprozess insbesondere die Artikel von einer ersten, ggf. unregelmäßigen Anordnung der Artikel auf dem ersten Transportmittel zu einer vorgegebenen, zweiten Anordnung auf dem zweiten Transportmittel bringt.

Diese Aufgabe wird erfindungsgemäß gelöst durch ein Verfahren mit den Merkmalen des Anspruchs 1. Vorteilhafte Weiterbildungen der Erfindung sind in den Unteransprüchen angegeben.

Im erfindungsgemäßen Verfahren wird ein Transportmittel, beispielsweise dasjenige, das nach der Übergabe einen weiteren Weg zurückzulegen hat, nach dem Ende der Synchronphase zeitweise mit einer Geschwindigkeitsüberhöhung im Vergleich zum Geschwindigkeitsniveau am Ende der Synchronphase betrieben. Dadurch bieten sich Vorteile hinsichtlich einer Verkürzung der Taktzeit.

Das Beschleunigen und das Abbremsen der beiden Transportmittel können dabei beispielsweise in Abhängigkeit von den Viskositäts-, Reib- und/oder anderen Eigenschaften der zu transportierenden Artikel so gewählt werden, dass alle negativen Beschleunigungsauswirkungen auf die Artikel vermieden werden. Die höhere mittlere Geschwindigkeit als im Stand der Technik führt zu einer schnelleren Übergabe der Artikel, d.h. zu einer kürzeren Übergabezeit. Damit steigt der Durchsatz des mit dem erfindungsgemäßen Verfahren betriebenen Transportsystems, d.h. die Zahl der pro Zeiteinheit übergegebenen Artikel, was eine Leistungssteigerung der Verpackungsmaschine bedeutet.

Vorzugsweise ist die Dauer des Anstiegs der gemeinsamen Geschwindigkeit von einem Geschwindigkeitsniveau zu Beginn der Synchronphase zu einer während der Synchronphase erreichten Maximalgeschwindigkeit genauso lang wie die Dauer das Abfalls der Geschwindigkeit vom Geschwindigkeitsmaximum zu einem Geschwindigkeitsniveau am Ende der Synchronphase. Auf diese Weise kann sichergestellt werden, dass während des Beschleunigungsabschnitts innerhalb der Synchronphase keine höheren Beschleunigungskräfte auf die Transportmittel und auf die Artikel wirken als während des Abbremsabschnitts - und umgekehrt. Dadurch wird nochmals sichergestellt, dass keine zu hohen Kräfte auf die Artikel wirken.

In einer vorteilhaften Ausführungsvariante ist das Geschwindigkeitsniveau am Ende der Synchronphase anders als das Geschwindigkeitsniveau zu Beginn der Synchronphase. In bestimmten Fällen kann auf diese Weise eine besonders kurze Zeit des Übergabeprozesses erreicht werden. In der Regel bietet es sich an, das Geschwindigkeitsniveau am Ende der Synchronphase unter Berücksichtigung des zurückzulegenden Weges und der maximalen Verzögerung desjenigen Transportmittels zu bestimmen, das nach der Synchronphase einen kürzeren Weg zurückzulegen hat als das andere Transportmittel.

Die Dauer der Synchronphase kann jedoch häufig auch dadurch verkürzt werden, dass der Betrag des Anstiegs der Geschwindigkeit von einem Geschwindigkeitsniveau zu Beginn der Synchronphase zu einer Maximalgeschwindigkeit gleich ist mit dem Betrag eines Geschwindigkeitsabfalls von der Maximalgeschwindigkeit zu dem Geschwindigkeitsniveau am Ende der Synchronphase. Mit anderen Worten beginnt und endet die Synchronphase dann bei jeweils demselben Geschwindigkeitsniveau.

Ein einfaches Bewegungsprofil mit minimierten Erschütterungen des Artikels ergibt sich, wenn die gemeinsame Geschwindigkeit während der Synchronphase genau einen Abschnitt hat, in der die gemeinsame Geschwindigkeit ansteigt (d.h. einen Beschleunigungsabschnitt), und genau einen Bremsabschnitt, in dem die gemeinsame Geschwindigkeit wieder abfällt.

In einigen Fällen könnte bei solch einem Bewegungsprofil jedoch eine zulässige Maximalgeschwindigkeit eines oder beider Transportmittel überschritten werden. Damit dies nicht geschieht, könnte die Maximalgeschwindigkeit auch während der Synchronphase auf einen bestimmten Maximalwert beschränkt bleiben. Um dennoch eine möglichst kurze Übergabezeit zu erreichen, könnte die Geschwindigkeit während der Synchronphase zunächst auf die zulässige Maximalgeschwindigkeit ansteigen, und diese Maximalgeschwindigkeit könnte für eine bestimmte Zeit gehalten werden, bis die gemeinsame Geschwindigkeit wieder auf das Niveau zum Endpunkt der Synchronphase absinkt.

Erhebliche Vorteile bietet eine Variante des erfindungsgemäßen Verfahrens, bei der ein Transportmittel, beispielsweise dasjenige, das vor der Übergabe einen weiteren Weg zurückzulegen hat als das andere Transportmittel, vor der Synchronphase zeitweise mit einer Geschwindigkeitsüberhöhung im Vergleich zum Geschwindigkeitsniveau zum Beginn der Synchronphase betrieben wird. Eine solche Geschwindigkeitsüberhöhung war bisher noch nirgendwo angeregt worden. Sie widerspricht zunächst der Intuition, da sie dazu führt, dass das mit der Geschwindigkeitsüberhöhung betriebene Transportmittel nach einer ersten Beschleunigung wieder abgebremst werden muss, um anschließend während der Synchronphase wieder gemeinsam mit dem anderen Transportmittel beschleunigt zu werden. Die Geschwindigkeitsüberhöhung hat jedoch den enormen Vorteil, dass die Dauer der Beschleunigungsphase vom Beginn der Beschleunigung bis zum Beginn der Synchronphase verkürzt werden kann. Denn wegen der Geschwindigkeitsüberhöhung kann in der Beschleunigungsphase eine höhere Durchschnittsgeschwindigkeit erzielt werden, ohne dass dabei eine zulässige Maximalgeschwindigkeit oder eine zulässige Maximalbeschleunigung überschritten würden. Zusammen mit dem erfindungsgemäßen Verkürzen der Übergabezeit und der Synchronphase ermöglicht die Geschwindigkeitsüberhöhung auch ein Verkürzen der Beschleunigungsphase und damit eine weitere Verkürzung der Taktzeiten.

Eine sanfte, störungsfreie Übergabe der Artikel wird begünstigt, wenn die Ableitung des Geschwindigkeitsprofils jedes Transportmittels jederzeit stetig ist und auf diese Weise ruckartige Änderungen der Bewegung vermieden werden.

In einer vorteilhaften Ausführungsvariante wird die Beschleunigung desjenigen Transportmittels, das vor der Übergabe einen kürzeren Weg als das andere Transportmittel zurückzulegen hat, unmittelbar vor der Synchronphase verringert. In der Regel kann die Beschleunigung sogar (zumindest momentan) auf Null verringert werden, sodass zumindest momentan oder für eine kurze Zeitdauer eine bestimmte Geschwindigkeit gehalten wird. Die Verringerung der Beschleunigung des Transportmittels erleichtert den Angleich der Geschwindigkeiten der beiden Transportmittel und damit das Einleiten einer gemeinsamen Bewegung und Geschwindigkeit während der Synchronphase.

Analog dazu kann der Austritt aus der Synchronphase verbessert werden, indem die negative Beschleunigung desjenigen Transportmittels, das nach der Synchronphase einen kürzeren Weg als das andere Transportmittel zurückzulegen hat, unmittelbar nach der Synchronphase allmählich ansteigt.

Günstig wäre es auch, wenn sich der Betrag der Beschleunigung der beiden Transportmittel vor dem Ende der Synchronphase verringert, im Extremfall sogar bis auf 0, um eine Trennung der beiden Geschwindigkeitsprofile am Ende der Synchronphase zu erleichtern.

Im Folgenden wird ein vorteilhaftes Ausführungsbeispiel der Erfindung anhand einer Zeichnung näher erläutert. Im Einzelnen zeigen:
- Figur 1: eine stark vereinfachte Darstellung eines erfindungsgemäßen Transportsystems,
- Figur 2: eine erste Variante der Geschwindigkeitsprofile des ersten und zweiten Transportmittels im erfindungsgemäßen Verfahren,
- Figur 3: eine zweite Variante der Geschwindigkeitsprofile,
- Figur 4: eine dritte Variante der Geschwindigkeitsprofile,
- Figur 5: die Geschwindigkeitsprofile zweier Transportmittel in einem herkömmlichen Transportsystem.

Gleiche Komponenten sind in den Figuren durchgängig mit gleichen Bezugszeichen versehen.

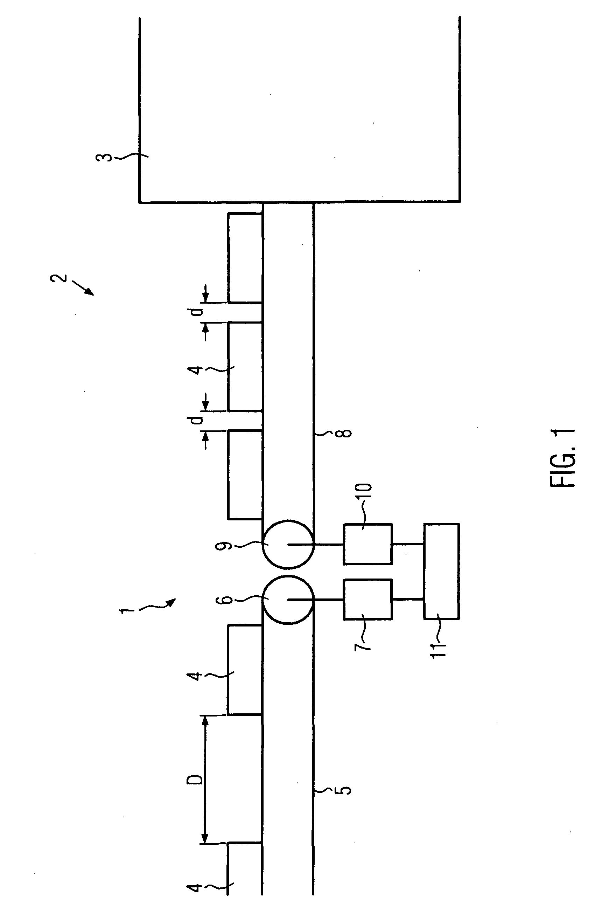

Figur 1 zeigt ein erfindungsgemäßes Transportsystem 1 als Teil einer ebenfalls erfindungsgemäßen Verpackungsanlage 2, von der zusätzlich zum Transportsystem 1 schematisch der Anfang einer Verpackungsmaschine 3 dargestellt ist, bei der es sich z.B. um eine Schalenverschließmaschine ("Traysealer") handeln kann. Die Verpackungsmaschine 3 bearbeitet (z.B. versiegelt) Artikel 4 , bei denen es sich insbesondere um Verpackungen 4 handeln kann. Die Artikel 4 befinden sich zunächst ggf. ungeordnetauf einem zum Transportsystem 1 gehörenden, ersten Transportmittel 5. Bei diesem Transportmittel 5 kann es sich beispielsweise um eine Mitnehmerkette handeln, die die Artikel 4 seitlich festhält. Im dargestellten Ausführungsbeispiel handelt es sich beim ersten Transportmittel 5 zwar auch um einen Endlosförderer, aber nicht um eine Mitnehmerkette, sondern um ein Förderband. Dieses endlose Förderband 5 bewegt sich um eine Umlenkrolle 6, die im Ausführungsbeispiel als Antriebsrolle ausgebildet ist. Ein erster Antrieb 7, beispielsweise ein Elektro- und insbesondere ein Servomotor, dient zum Antreiben der Antriebsrolle 6 und damit des ersten Transportmittels 5.

Das Transportsystem 1 verfügt ferner über ein zweites Transportmittel 8, im dargestellten Ausführungsbeispiel ebenfalls ein endloses Förderband, welches die Artikel 4 der Verpackungsmaschine 3 zuführt. Das zweite Transportmittel 8 wird mittels einer Antriebsrolle 9 angetrieben, die ihrerseits mittels eines zweiten Antriebs 10 angetrieben wird. Beim zweiten Antrieb 10 handelt es sich ebenfalls um einen Elektro- und insbesondere um einen Servomotor. Die beiden Antriebe 7, 10 sind unabhängig voneinander, um die beiden Transportmittel 5, 8 unabhängig voneinander bewegen zu können. Alternativ dazu könnte ein einzelner, gemeinsamer Antrieb vorgesehen sein, dessen Antriebskraft mittels eines Getriebes unabhängig auf die beiden Transportmittel 5, 8 übertragen wird. Eine Steuerung 11 dient dazu, die beiden Antriebe 7, 10 zu steuern und so die Bewegung der beiden Transportmittel 5, 8 bzw. des Transportsystems 1 zu koordinieren. Diese Steuerung 11 kann separat für das Transportsystem 1 vorgesehen sein. Sie kann jedoch auch Teil einer Steuerung der gesamten Verpackungsanlage 2 sein. Insbesondere bietet sich an, wenn die Steuerung 11 des Transportsystems 1 zumindest an die Steuerung der Verpackungsmaschine 3 gekoppelt ist, sodass der Betrieb des Transportsystems 1 an einen in der Regel intermittierend gestalteten Betrieb der Verpackungsmaschine 3 angepasst werden kann.

Ziel des erfindungsgemäßen Transportsystems 1 ist es, die Artikel 4 so vom ersten Transportmittel auf das zweite Transportmittel 8 zu übergeben, dass die Artikel 4 auf dem zweiten Transportmittel 8 mit einem anderen - im Ausführungsbeispiel kleineren - Abstand d voneinander gruppiert werden als der Abstand D zweier benachbarter Artikel 4 auf dem ersten Transportmittel 5 oder mit einem regelmäßigen Abstand d im Unterschied zu einem unregelmäßigen Abstand auf dem ersten Transportmittel 5.

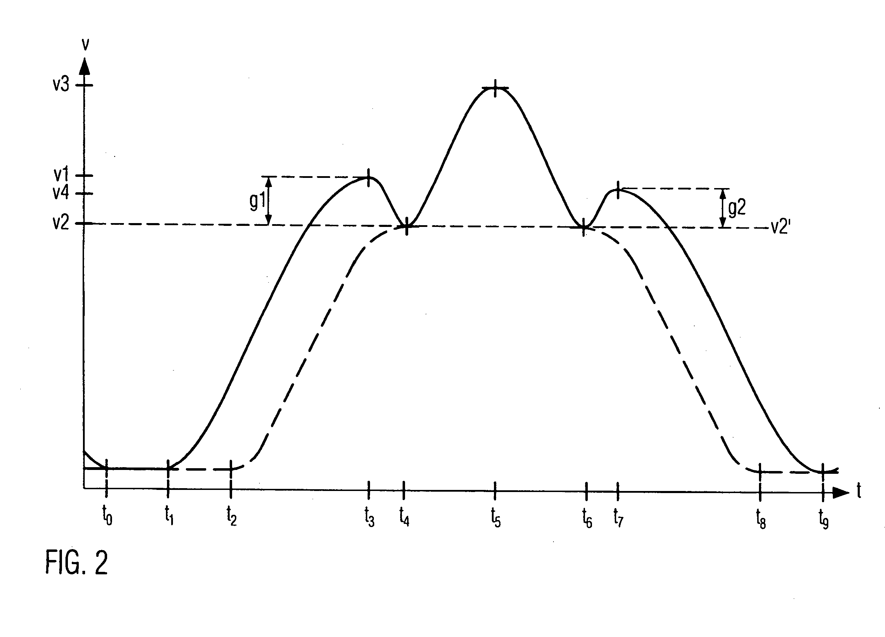

Figur 2 zeigt in einem Zeit-Geschwindigkeitsdiagramm exemplarisch die Geschwindigkeitsprofile des ersten und des zweiten Transportmittels 5, 8 in einem Ausführungsbeispiel des erfindungsgemäßen Verfahrens. Dabei ist die Zeit t auf der X-Achse dargestellt, die Geschwindigkeit v auf der Y-Achse. Das Geschwindigkeitsprofil des ersten Transportmittels 5 ist mit einer durchgezogenen Linie dargestellt, ebenso wie das Geschwindigkeitsprofil der gemeinsamen Geschwindigkeit der beiden Transportmittel 5, 6 in der Ruhe- und der Synchronphase. In den Intervallen, in denen die Geschwindigkeit des zweiten Transportmittels 8 von der Geschwindigkeit des ersten Transportmittels 5 abweicht, ist das Geschwindigkeitsprofil des zweiten Transportmittels 8 mit gestrichelten Linien wiedergegeben.

Zum Zeitpunkt t0 beginnt ein Takt bzw. Zyklus des Transportsystems 1. Die Phase zwischen den Zeitpunkten t0 und t1 wird als Ruhephase bezeichnet, da sich die beiden Transportmittel 5, 8 während dieser Ruhephase nicht bewegen. Eine solche Ruhephase könnte auch entfallen, wenn sie für eine Bearbeitung der Artikel, beispielsweise für ein Befüllen der als Verpackungen ausgebildeten Artikel, nicht benötigt wird.

Wie aus Figur 1 hervorgeht, sind die beabsichtigten Abstände d zwischen den Artikeln 4 auf dem zweiten Transportmittel 8 kleiner als die Abstände D zwischen den Artikeln 4 auf dem ersten Transportmittel 5. Daraus ergibt sich, dass das erste Transportmittel 5 vor der Übergabe eines Artikels 4, d.h. vor Beginn der Synchronphase zum Zeitpunkt t4, einen größeren Weg zurückzulegen hat als das zweite Transportmittel 8. Gleichzeitig sind in der Steuerung 11 maximal zulässige Werte für die Geschwindigkeit und die Beschleunigung des ersten und des zweiten Transportmittels 5, 8 hinterlegt. Unter Berücksichtigung dieser Randbedingungen, d.h. des vom ersten Transportmittels 5 zurückzulegenden Weges, der Maximalgeschwindigkeit und der Maximalbeschleunigung des ersten Transportmittels 5, berechnet die Steuerung 11 ein Geschwindigkeitsprofil des ersten Transportmittels 5 für die sogenannte Beschleunigungsphase, die sich an die Ruhephase anschließt und der Synchronphase vorausgeht. Das sich ergebende Geschwindigkeitsprofil ist in Figur 2 dargestellt. Die Beschleunigungsphase beginnt im Zeitpunkt t1 mit der Beschleunigung des ersten Transportmittels 5. Das zweite Transportmittel 8 bleibt noch bis zum Zeitpunkt t2 in Ruhe; seine Bewegung beginnt erst im Zeitpunkt t2, da es einen kürzeren Weg als das erste Transportmittel 5 zurücklegen muss.

Zum Zeitpunkt t3 erreicht das erste Transportmittel 5 seine höchste Geschwindigkeit v1 während der Beschleunigungsphase. Diese Geschwindigkeit v1 ist höher als die Geschwindigkeit v2, die beide Transportmittel 5, 8 zu Beginn der Synchronphase im Zeitpunkt t4 annehmen. Im Vergleich zu dem Geschwindigkeitsniveau v2 zu Beginn der Synchronphase wird das erste Transportmittel 5 also zum Zeitpunkt t3 mit einer Geschwindigkeitsüberhöhung g1 betrieben. Zwischen den Zeitpunkten t3 und t4 wird das erste Transportmittel 5 auf das Geschwindigkeitsniveau v2 abgebremst. Die Geschwindigkeitsüberhöhung g1 des ersten Transportmittels 5 hat den Vorteil, dass das Integral unter dem Geschwindigkeitsprofil des ersten Transportmittels 5, das dem zurückgelegten Weg entspricht, schon mit einer kürzeren Beschleunigungsphase (zwischen den Zeitpunkten t1 und t4) erreicht wird als im Stand der Technik, bei dem das erste Transportmittel 5 während der Beschleunigungsphase maximal das Geschwindigkeitsniveau v2 wie zu Beginn der Synchronphase erreicht. Da die Beschleunigungsphase verkürzt werden kann, kann insgesamt die Taktzeit des Transportsystems 1 verkürzt werden.

Zum Zeitpunkt t4 beginnt, wie bereits erläutert, die Synchronphase bzw. die Synchronfahrt der beiden Transportmittel 5, 8. Um zu gewährleisten, dass tatsächlich beide Transportmittel 5, 8 mit derselben Geschwindigkeit v2 starten, verringert sich der Geschwindigkeitsanstieg, d.h. die Beschleunigung des zweiten Transportmittels 8, unmittelbar vor Beginn der Synchronphase, beispielsweise im Zeitraum zwischen den Zeitpunkten t3 und t4. Die Beschleunigung kann bis auf 0 verringert werden. Das Geschwindigkeitsprofil des ersten Transportmittels 5 ist hingegen so eingerichtet, dass die Ableitung dieses Geschwindigkeitsprofils d.h. die Beschleunigung des ersten Transportmittels 5, zu jedem Zeitpunkt stetig ist, insbesondere auch im Zeitpunkt t4. Damit wird im Zeitpunkt t4 ein "Knick" im Geschwindigkeitsprofil und somit eine ruckartige Bewegung des ersten Transportmittels 5 vermieden.

Die Synchronphase zwischen den Zeitpunkten t4 und t6 zeichnet sich dadurch aus, dass in ihr die beiden Transportmittel 5, 8 stets dieselbe Geschwindigkeit haben. Zunächst steigt diese gemeinsame Geschwindigkeit zwischen den Zeitpunkten t4 und t5 bis auf einen Maximalwert v3 an, der im Ausführungsbeispiel noch höher ist als die Geschwindigkeit v1. Anschließend sinkt die gemeinsame Geschwindigkeit wieder zwischen den Zeitpunkten t5 und t6 ausgehend von der Maximalgeschwindigkeit v3 auf ein Geschwindigkeitsniveau v2', das unterschiedlich oder gleich sein kann zu dem Geschwindigkeitsniveau v2 zu Beginn der Synchronphase. Das Geschwindigkeitsprofil in der Synchronphase ist im Ausführungsbeispiel symmetrisch zum Zeitpunkt t5, d.h. der Beschleunigungsabschnitt der Synchronphase zwischen den Zeitpunkten t4 und t5 hat genau dieselbe Dauer wie der Abbremsabschnitt zwischen den Zeitpunkten t5 und t6. Das Geschwindigkeitsprofil der gemeinsamen Geschwindigkeit während der Synchronphase ist bestimmt durch die maximal zulässige Beschleunigung der beiden Transportmittel 5, 8 und den in der Synchronphase zurückzulegenden Weg, die in der Steuerung 11 hinterlegt sind. Abweichend von der Darstellung in Figur 2 kann es günstiger sein, wenn das Geschwindigkeitsniveau v2' am Ende der Synchronphase anders als ist als das Geschwindigkeitsniveau v2 zu Beginn der Synchronphase.

Zum Zeitpunkt t6 endet die Synchronphase, und es beginnt die Bremsphase. Das zweite Transportmittel 8 wird ausgehend vom Geschwindigkeitsniveau v2' zum Ende der Synchronphase abgebremst, bis es zum Zeitpunkt t8 seine Ruhestellung erreicht. Das erste Transportmittel 5 hingegen, das wiederum einen größeren Weg als das zweite Transportmittel 8 zurückzulegen hat, wird ausgehend vom gemeinsamen Geschwindigkeitsniveau v2' zum Ende der Synchronphase zwischen den Zeitpunkten t6 und t7 auf eine abermals höhere Geschwindigkeit v4 beschleunigt. Mit anderen Worten wird das erste Transportmittel 5 auch während der Bremsphase mit einer Geschwindigkeitsüberhöhung g2 im Vergleich zum gemeinsamen Geschwindigkeitsniveau v2' zum Ende der Synchronphase betrieben. Diese Geschwindigkeitsüberhöhung g2 des ersten Transportmittels 5 während der Bremsphase ist jedoch in diesem Beispiel geringer als die Geschwindigkeitsüberhöhung g1 während der Beschleunigungsphase. Alternativ könnte die Geschwindigkeitsüberhöhung g1 auch kleiner oder gleich groß sein wie die Geschwindigkeitsüberhöhung g2. Ausgehend von der Geschwindigkeit v4 zum Zeitpunkt t7 wird das erste Transportmittel 5 anschließend so abgebremst, dass der Verlauf der Beschleunigung des ersten Transportmittels 5 weiterhin immer stetig bleibt, und dass möglichst lange die maximal zulässige negative Beschleunigung des ersten Transportmittels 5 erreicht wird. Zum Zeitpunkt t9 befindet sich dann auch das erste Transportmittel 5 wieder in Ruhe. Es beginnt eine neue Ruhephase der beiden Transportmittel und damit ein neuer Takt oder Zyklus. Der Zeitpunkt t9 entspricht also funktionell dem Zeitpunkt t0, und es wiederholt sich anschließend das in Figur 2 gezeigte Geschwindigkeitsprofil.

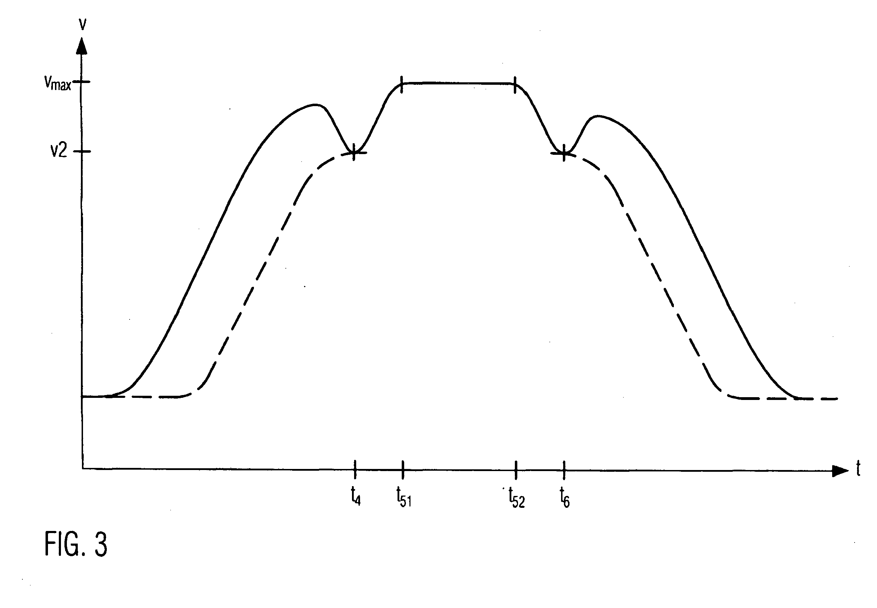

Figur 3 zeigt eine weitere Variante der Geschwindigkeitsprofile der beiden Transportmittel 5, 8 im erfindungsgemäßen Verfahren. Bei dieser Variante würden die beiden Transportmittel 5, 8 während der Synchronphase, d.h. zwischen den Zeitpunkten t4 und t6, mit dem in Figur 2 gezeigten Geschwindigkeitsprofil eine Geschwindigkeit erreichen, die über der maximal zulässigen Geschwindigkeit vₘₐₓ eines oder beider Transportmittel 5, 8 liegt. Um dies zu vermeiden, wird die gemeinsame Geschwindigkeit der beiden Transportmittel 5, 8 während der Synchronphase zunächst in einem Beschleunigungsabschnitt zwischen den Zeitpunkten t4 und t51 nur auf die maximal zulässige Geschwindigkeit vₘₐₓ beschleunigt. Diese Maximalgeschwindigkeit vₘₐₓ wird konstant beibehalten bis zum Zeitpunkt t52. Anschließend erfolgt das gemeinsame Abbremsen der beiden Transportmittel 5, 8 zwischen den Zeitpunkten t52 und t6. Im Übrigen entsprechen die Geschwindigkeitsprofile der beiden Transportmittel 5, 8 den in Figur 2 gezeigten Geschwindigkeitsprofilen. Wie in Figur 2 sind auch in Figur 3 das Geschwindigkeitsprofil des ersten Transportmittels 5 und die gemeinsame Geschwindigkeit beider Transportmittel 5, 8 mit einer durchgezogenen Linie, das davon abweichende Geschwindigkeitsprofil des zweiten Transportmittels 8 mit einer gestrichelten Linie dargestellt.

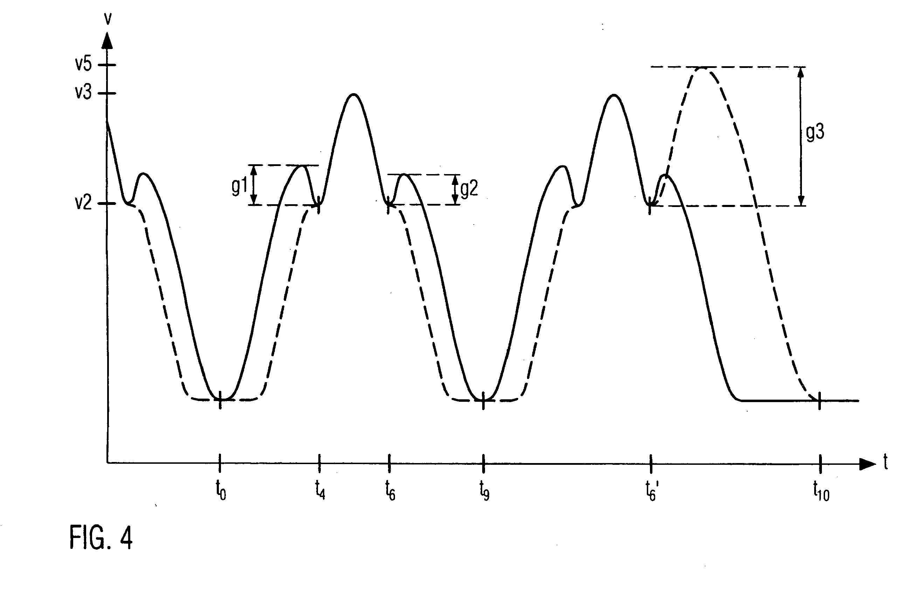

Figur 4 zeigt in einem weiteren Zeit-Geschwindigkeits-Diagramm eine Sondersituation im erfindungsgemäßen Verfahren. Abermals sind das Geschwindigkeitsprofil des ersten Transportmittels 5 sowie die gemeinsame Geschwindigkeit der beiden Transportmittel 5, 8 mit einer durchgezogenen Linie dargestellt, das davon abweichende Geschwindigkeitsprofil des zweiten Transportmittels 8 mit einer gestrichelten Linie. Zwischen den Zeitpunkten t0 und t9 bewegen sich die beiden Transportmittel 5, 8 mit dem bereits ausführlich anhand von Figur 2 dargestellten und erläuterten Geschwindigkeitsprofil. Wie bereits erläutert, wird das erste Transportmittel 5 vor Beginn der Synchronphase mit einer Geschwindigkeitsüberhöhung g1 betrieben. Während der Synchronphase zwischen den Zeitpunkten t4 und t6 steigt die gemeinsame Geschwindigkeit der beiden Transportmittel 5, 8 zunächst an, um anschließend auf das Ausgangsniveau v2' wie zu Beginn der Synchronphase abzufallen. Nach dem Ende der Synchronphase im Zeitpunkt t6 wird das erste Transportmittel 5 abermals mit einer Geschwindigkeitsüberhöhung g2 im Vergleich zum gemeinsamen Geschwindigkeitsniveau v2' am Ende der Synchronphase betrieben.

Zum Zeitpunkt t9 beginnt ein neuer Takt bzw. Zyklus des Transportsystems 1. Dieser neue Takt unterscheidet sich dadurch von den üblichen Arbeitstakten, dass sich nun an das Ende der Synchronphase im Zeitpunkt t6' eine sogenannte Abholphase anschließt. Diese Abholphase findet statt, wenn auf dem zweiten Transportmittel 8 eine Gruppe von Artikeln 4 mit einer vorgegebenen Anzahl von Artikeln 4 zusammengestellt wurde. Diese Gruppe wird anschließend gemeinsam abtransportiert bzw. abgeholt. In der Abholphase wird das erste Transportmittel 5 mit dem gleichen Geschwindigkeitsprofil und mit derselben Geschwindigkeitsüberhöhung g2 betrieben wie in dem üblichen, in Figur 2 dargestellten Arbeitstakt. Das zweite Transportmittel 8 hingegen muss nun einen deutlich weiteren Weg zurücklegen, um die zusammengestellte Gruppe von Artikeln 4 abzutransportieren. Zu diesem Zweck wird das zweite Transportmittel 8 ausgehend vom Zeitpunkt t6' mit einer weitaus größeren Geschwindigkeitsüberhöhung g3 betrieben als das erste Transportmittel 5. Diese Geschwindigkeitsüberhöhung g3 des zweiten Transportmittels 8 ist so groß, dass das zweite Transportmittel 8 während der Abholphase sogar eine höhere Geschwindigkeit v5 erreichen kann als die Geschwindigkeit v3 während der Synchronphase. Ausgehend von der Geschwindigkeit v5 wird das zweite Transportmittel wieder abgebremst, bis es zum Zeitpunkt t10 wieder in Ruhe ist und einer neuer Zyklus beginnen kann. Aus Figur 4 wird leicht ersichtlich, dass das Integral unter dem Geschwindigkeitsprofil des zweiten Transportmittels 8 während der Abholphase, d.h. zwischen den Zeitpunkten t6' und t10, sehr groß ist. Entsprechend groß ist der in dieser Abholphase vom zweiten Transportmittel 8 zurückgelegte Weg.

Abweichend von der Situation in Figur 4 kann der Fall auftreten, dass die Geschwindigkeitsüberhöhung g3 des zweiten Transportmittels 8 während der Abholphase so groß würde, dass eine maximal zulässige Geschwindigkeit dieses zweiten Transportmittels 8 oder der darauf befindlichen Artikel 4 überschritten würde. Um diese Situation zu vermeiden, könnte die Abholphase - ähnlich wie in Figur 3 dargestellt - eine Phase aufweisen, bei der das zweite Transportmittel 8 konstant die maximal zulässige Geschwindigkeit vₘₐₓ beibehält, um eine Beschleunigung über den Wert vₘₐₓ hinaus zu vermeiden.

Die in der Steuerung 11 hinterlegten Randbedingungen d.h. die vorgegebenen oder zu erreichenden Abstände d, D zwischen den Artikeln 4, die Maximalgeschwindigkeit und die Maximalbeschleunigung der beiden Transportmittel 5, 8 können vom Bediener verändert werden. Damit kann die Bewegung des Transportsystems 1 an sich verändernde Situationen und insbesondere an die Eigenschaften der zu transportieren Artikel 4 angepasst werden. Zum Verändern der Randbedingungen bzw. zum Eingeben neuer Randbedingungen kann eine mit der Steuerung 11 gekoppelte Eingabevorrichtung vorgesehen sein.

Das erfindungsgemäße Verfahren ermöglicht eine deutlich höhere Taktleistung (d.h. eine höhere Zahl von pro Zeiteinheit übergebenen Artikeln) als herkömmliche Verfahren. Beispielsweise können mit einem herkömmlichen Verfahren, wie in Figur 5 dargestellt, 73 Packungen pro Minute übergeben und damit (bei 5 Packungen pro Takt) nur 14,6 Takte pro Minute erreicht werden. Mit dem erfindungsgemäßen Verfahren können im Vergleich dazu 82 Packungen pro Minute übergeben bzw. 16, 4 Takte pro Minute erreicht werden. Dies entspricht einer Taktleistungssteigerung von 12%.

Ausgehend von dem dargestellten Ausführungsbeispiel kann das erfindungsgemäße Verfahren in vielfacher Weise verändert werden. Beispielsweise wäre es denkbar, dass die Geschwindigkeitsüberhöhungen g1 und g2 vor und nach der Synchronphase den gleichen Wert haben. Außerdem wäre es möglich, dass nicht das erste Transportmittel 5, sondern das zweite Transportmittel 8 vor bzw. nach der Synchronphase mit einer Geschwindigkeitsüberhöhung betrieben wird, wenn sich die Abstände zwischen den Artikeln 4 vom ersten Transportmittel 5 zum zweiten Transportmittel 8 vergrößern sollen. Entsprechend würde in diesen Fall nicht das erste Transportmittel 5, sondern das zweite Transportmittel 8 zuerst mit seiner Beschleunigung beginnen.

## Patentansprüche

1. Verfahren zum Übergeben eines Artikels (4) in einem Transportsystem (1) einer Verpackungsanlage (2) von einem ersten antreibbaren Transportmittel (5) zu einem zweiten antreibbaren Transportmittel (8), wobei die Übergabe des Artikels während einer Synchronphase erfolgt, in der das erste (5) und das zweite Transportmittel (8) zu jedem Zeitpunkt untereinander dieselbe gemeinsame Geschwindigkeit haben, wobei die gemeinsame Geschwindigkeit während der Synchronphase zumindest abschnittsweise ansteigt und/oder zumindest abschnittsweise abfällt, **dadurch gekennzeichnet, dass** ein Transportmittel (5, 8) nach dem Ende der Synchronphase zeitweise mit einer Geschwindigkeitsüberhöhung (g2) im Vergleich zum Geschwindigkeitsniveau (v2') beim Ende der Synchronphase betrieben wird.

2. Verfahren nach Anspruch 1, **dadurch gekennzeichnet, dass** das Geschwindigkeitsniveau (v2') am Ende der Synchronphase unterschiedlich ist zum Geschwindigkeitsniveau (v2) zu Beginn der Synchronphase.

3. Verfahren nach Anspruch 1, **dadurch gekennzeichnet, dass** der Betrag des Anstiegs der Geschwindigkeit von einem Geschwindigkeitsniveau (v2) zu Beginn der Synchronphase zu einer Maximalgeschwindigkeit (v3) gleich ist mit dem Betrag eines Geschwindigkeitsabfalls von der Maximalgeschwindigkeit (v3) zu einem Geschwindigkeitsniveau (v2) am Ende der Synchronphase.

4. Verfahren nach einem der vorangehenden Ansprüche, **dadurch gekennzeichnet, dass** die gemeinsame Geschwindigkeit während der Synchronphase genau eine Phase hat, in der die gemeinsame Geschwindigkeit ansteigt, und genau eine Phase, in der die gemeinsame Geschwindigkeit abfällt.

5. Verfahren nach einem der vorangegangenen Ansprüche, **dadurch gekennzeichnet, dass** die gemeinsame Geschwindigkeit während der Synchronphase auf eine Maximalgeschwindigkeit (vₘₐₓ) ansteigt, dass diese Maximalgeschwindigkeit (vₘₐₓ) für eine vorgegebene Zeit gehalten wird, und dass die gemeinsame Geschwindigkeit anschließend abfällt.

6. Verfahren nach einem der vorangehenden Ansprüche, **dadurch gekennzeichnet, dass** ein Transportmittel (5, 8) vor der Synchronphase zeitweise mit einer Geschwindigkeitsüberhöhung (g1) im Vergleich zum Geschwindigkeitsniveau (v2) zu Beginn der Synchronphase betrieben wird.

7. Verfahren nach einem der vorangehenden Ansprüche, **dadurch gekennzeichnet, dass** das vor bzw. nach der Synchronphase mit einer Geschwindigkeitsüberhöhung (g1, g2) betriebene Transportmittel (5, 8) während der Phase der Geschwindigkeitsüberhöhung zeitweise mit einer konstanten Geschwindigkeit betrieben wird.

8. Verfahren nach einem der vorangehenden Ansprüche, **dadurch gekennzeichnet, dass** die Ableitung des Geschwindigkeitsprofils jedes Transportmittels (5, 8) jederzeit stetig ist.

9. Verfahren nach einem der vorangehenden Ansprüche, **dadurch gekennzeichnet, dass** die Beschleunigung desjenigen Transportmittels (5, 8), das vor der Übergabe einen kürzeren Weg als das andere Transportmittel (5, 8) zurückzulegen hat, unmittelbar vor der Synchronphase vorzugsweise auf Null verringert wird.

10. Verfahren nach einem der vorangehenden Ansprüche, **dadurch gekennzeichnet, dass** die negative Beschleunigung desjenigen Transportmittels (5, 8), das nach der Synchronphase einen kürzeren Weg als das andere Transportmittel (5, 8) zurückzulegen hat, unmittelbar nach der Synchronphase ansteigt.

## Claims

1. A method of transferring an article (4) in a conveyor system (1) of a packaging plant (2) from a first drivable conveyor means (5) to a second drivable conveyor means (8), said transfer of the article taking place during a synchronous phase in which said first (5) and said second conveyor means (8) have the same common speed as one another at any time, wherein, during the synchronous phase, the common speed increases at least sectionwise and/or decreases at least sectionwise,
**characterized in that**, after the end of the synchronous phase, a conveyor means (5, 8) is temporarily operated with an excess speed (g2) in comparison with the speed level (v2') at the end of the synchronous phase.

2. A method according to claim 1, **characterized in that** the speed level (v2') at the end of the synchronous phase is different from the speed level (v2) at the beginning of the synchronous phase.

3. A method according to claim 1, **characterized in that** the amount to which the speed increases from a speed level (v2) at the beginning of the synchronous phase to a maximum speed (v3) is identical to the amount to which the speed decreases from the maximum speed (v3) to a speed level (v2) at the end of the synchronous phase.

4. A method according to one of the preceding claims, **characterized in that** the common speed during the synchronous phase has precisely one phase in which the common speed increases and precisely one phase in which the common speed decreases.

5. A method according to one of the preceding claims, **characterized in that** the common speed increases to a maximum speed (vₘₐₓ) during the synchronous phase, that this maximum speed (vₘₐₓ) is maintained for a predetermined period, and that the common speed decreases subsequently.

6. A method according to one of the preceding claims, **characterized in that**, prior to the synchronous phase, a conveyor means (5, 8) is temporarily operated with an excess speed (g1) in comparison with the speed level (v2) at the beginning of the synchronous phase.

7. A method according to one of the preceding claims, **characterized in that** the conveyor means (5, 8) operated before or after the synchronous phase with an excess speed (g1, g2) is temporarily operated with a constant speed during the excess speed phase.

8. A method according to one of the preceding claims, **characterized in that** the derivative of the speed profile of each conveyor means (5, 8) is continuous at any time.

9. A method according to one of the preceding claims, **characterized in that** the acceleration of the conveyor means (5, 8) that has to cover a shorter distance than the other conveyor means (5, 8) prior to the transfer is preferably reduced to zero immediately prior to the synchronous phase.

10. A method according to one of the preceding claims, **characterized in that** the negative acceleration of the conveyor means (5, 8) that has to cover a shorter distance than the other conveyor means (5, 8) after the synchronous phase increases immediately after the synchronous phase.

## Revendications

1. Procédé pour transférer un article (4) dans un système de transport (1) d'une installation d'emballage (2), à partir d'un premier moyen de transport (5) pouvant être entraîné, à un deuxième moyen de transport (8) pouvant être entraîné, procédé
selon lequel le transfert de l'article est effectué pendant une phase synchrone dans laquelle le premier (5) et le deuxième moyen de transport (8) ont la même vitesse commune entre eux, à tout instant,
et selon lequel, pendant la phase synchrone, la vitesse commune est croissante au moins par sections et/ou décroissante au moins par sections,
**caractérisé en ce que** l'on fait fonctionner un moyen de transport (5, 8), après la fin de la phase synchrone, temporairement avec une vitesse augmentée (g2) par rapport au niveau de vitesse (v2') à la fin de la phase synchrone.

2. Procédé selon la revendication 1, **caractérisé en ce que** le niveau de vitesse (v2') à la fin de la phase synchrone est différent du niveau de vitesse (v2) au début de la phase synchrone.

3. Procédé selon la revendication 1, **caractérisé en ce que** la valeur de l'accroissement de vitesse d'un niveau de vitesse (v2) au début de la phase synchrone jusqu'à une vitesse maximale (v3), est égale à la valeur d'une chute de vitesse de la vitesse maximale (v3) à un niveau de vitesse (v2) à la fin de la phase synchrone.

4. Procédé selon l'une des revendications précédentes, **caractérisé en ce que** pendant la phase synchrone, la vitesse commune comporte exactement une phase dans laquelle la vitesse commune est croissante, et exactement une phase dans laquelle la vitesse commune est décroissante.

5. Procédé selon l'une des revendications précédentes, **caractérisé en ce que** pendant la phase synchrone, la vitesse commune croît jusqu'à une vitesse maximale (vₘₐₓ), **en ce que** cette vitesse maximale (vₘₐₓ) est maintenue pour un temps prédéterminé, et **en ce que** la vitesse commune décroît ensuite.

6. Procédé selon l'une des revendications précédentes, **caractérisé en ce que** l'on fait fonctionner un moyen de transport (5, 8) avant la phase synchrone, temporairement avec une vitesse augmentée (g1) par rapport au niveau de vitesse (v2) au début de la phase synchrone.

7. Procédé selon l'une des revendications précédentes, **caractérisé en ce que** l'on fait fonctionner le moyen de transport (5, 8) fonctionnant avec une vitesse augmentée (g1, g2) avant ou après la phase synchrone, temporairement avec une vitesse constante pendant la phase de la vitesse augmentée.

8. Procédé selon l'une des revendications précédentes, **caractérisé en ce que** la dérivée du profil de vitesse de chaque moyen de transport (5, 8) est continue à tout moment.

9. Procédé selon l'une des revendications précédentes, **caractérisé en ce que** l'accélération du moyen de transport (5, 8), qui, avant le transfert, a un chemin à parcourir plus court que l'autre moyen de transport (5, 8), est réduite de préférence à zéro directement avant la phase synchrone.

10. Procédé selon l'une des revendications précédentes, **caractérisé en ce que** l'accélération négative du moyen de transport (5, 8), qui, après la phase synchrone, a un chemin à parcourir plus court que l'autre moyen de transport (5, 8), croît directement après la phase synchrone.
